# EUROPEAN PATENT SPECIFICATION

(11) **EP 1 025 900 B1**
(45) Date of publication and mention of the grant of the patent: **03.05.2006**
(21) Application number: 00102481.9
(22) Date of filing: 03.02.2000
(51) Int. Cl.: B01J 3/00, B01J 19/00, C08F 10/06

(54) **Apparatus and method for pressurizing a propylene polymerization reactor**
Vorrichtung und Verfahren zur Druckerhöhung eines Propylenpolymerisationsreaktor
Dispositif et procédé pour la mise sous pression d'un réacteur pour la polymérisation de propylène

(30) Priority: 02.02.1999 US 243217
(43) Date of publication of application: 09.08.2000
(73) Proprietor: FINA TECHNOLOGY, INC., Houston, Texas 77267-4412 (US)
(72) Inventor: Nguyen, Thanh, Sugar Land, Texas 77478 (US); Parker, Wes, La Porte, Texas 77571 (US); Duggar, Don Austin, League City, Texas 77573 (US); Griffith, Aron, Humble, Texas 77338 (US)
(74) Representative: Detrait, Jean-Claude

(56) References cited:
- WO-A-97/13790
- US-A- 3 294 772
- US-A- 4 822 497
- US-A- 5 173 551

## Description

### TECHNICAL FIELD

The present invention relates, in general, to a system, apparatus and method for polymerizing propylene including a propylene pressurization vessel operated under supercritical conditions.

### BACKGROUND OF THE INVENTION

Without limiting the scope of the present invention, the background of the invention is described with reference to propylene polymerization and copolymerization reactors and systems. Conventional propylene polymerization systems have been operated with temperature and pressure ranges well below the critical region of propylene, for example, below a critical temperature (T_{c}) of 197.2°F and a critical pressure of 655.4 psig. For example, in more than one conventional process the polymerization system is typically operated at a temperature of about 140°F and 180°F and a pressure in the range of 440 to 480 psig. Surprisingly, however, it has been discovered that with presently available propylene polymerization catalysts, production is increased if the systems are operated outside of the conventional temperature and pressure ranges previously employed.

However, in order to take advantage of the unexpected benefits of operating outside of conventional temperature and pressure ranges, it has been found necessary to provide a propylene pressurization vessel that is operated above the critical temperature and pressure range of propylene, e.g., in the supercritical state. Thus, there exists a need for a propylene polymerization system that includes a pressurization vessel adapted to operate outside of conventional parameters.

US-A-3,294,772 discloses a process for the separation of crystalline and non-crystalline polymer fractions of a polypropylene polymeric composition which comprises polymerizing propylene in a polymeric zone at a temperature and pressure above the critical temperature and pressure of propylene and in the absence of additional solvent, thereafter while maintaining sufficient pressure to retain propylene solvent in a fluid form lowering the supercritical pressure of the resulting polymer composition to precipitate only the crystalline portion of said polypropylene composition therefrom and to maintain the non-crystalline portion of said polypropylene composition in solution, thereafter fractionating the remaining solution of non-crystalline polypropylene and recovering separately as products of the process the resulting crystalline and non-crystalline polymer fractions.

WO-A-97/13790 discloses a process for homo- or co-polymerizing propylene, wherein propylene is polymerized in the presence of a catalyst at an elevated temperature in a reaction medium in which the major part of the reaction medium is propylene and the polymerization is carried in at least one CSTR or loop reactor, where the polymerization is carried out at a temperature and at a pressure which are above the corresponding critical temperature and the pressure of the reaction medium and where the residence time is at least 15 minutes. The process can also comprise a subcritical loop polymerization before the supercritical stage polymerization or a gas phase polymerization after the supercritical stage polymerization.

US-A-5,173,551 discloses a free-radical retrograde polymerization process for forming a polymer. An admixture of reactants including predetermined amounts of a monomer, a solvent, and a free-radical initiator is reacted. A precipitation polymerization reaction occurs such that a polymer-rich phase is at a temperature generally above the lower critical solution temperature (LCST) of the admixture.

US-A-4,822,497 discloses an aqueous-phase oxidizer and solids separator reactor. More particularly, the invention relates to a two-zone pressure vessel in which precipitates and other solids fall or are sprayed from a supercritical temperature super zone into a lower temperature sub-zone. The feed material may consist of various waste products which are subsequently oxidized in the super zone of the pressure vessel. The resultant brine or slurry which is found at the lower temperature sub-zone of the vessel is removed via a pipe and disposed of accordingly.

### SUMMARY OF THE INVENTION

The present invention provides a method and apparatus for pressurizing a propylene polymerization system, including a pressurization vessel operated under supercritical conditions. The vessel contains propylene in a first region at supercritical conditions and propylene in a second region at subcritical conditions. In one embodiment of the invention, pressure in the pressurization vessel is controlled by the rate of injection of superheated propylene in the supercritical region. The temperature of propylene in the zone containing the compressible supercritical phase may be maintained by controlling the temperature of the superheated propylene feed. Preferably the temperature of the superheated propylene is in the range of 93.33°C (200°F) to 137.77°C (280°F) more preferably, the temperature of the superheated propylene is approximately 115.55°C (240°F). The pressure of the vessel is preferably in the range of 45.47 (660) to 55.12 bars (800 psig) more preferably in the range of 48.23 (700) to 50.30 bars (730 psig) most preferably in the range of approximately 48.92 bars (710 psig). The temperature of the dense subcooled liquid propylene in the vessel is typically in the range of 26.66°C (80°F) to 60°C (140°F), preferably 32.22°C (90°F) to 43.33°C (110°F) and most preferably approximately 37.77°C (100°F). Operation of the pressurization vessel in this mode allows a propylene polymerization system to be pressurized and operated at levels above conventional polymerization temperatures and pressures, for example, at pressures of 45.47 to 55.12 bars (660 to 700 psig).

### BRIEF DESCRIPTION OF THE DRAWINGS

For a more complete understanding of the present invention, including its features and advantages, reference is now made to the detailed description of the invention, taken in conjunction with the accompanying drawings in which like numerals identify like parts and in which:
FIGURE 1 is a schematic of an experimental apparatus for testing the control and operation of a vessel containing propylene at supercritical conditions and propylene at subcritical conditions;
FIGURES 2 and 3 are graphical representations of propylene condensation vs. time under varying conditions utilizing the apparatus of FIGURE 1; and
FIGURE 4 is a schematic of a propylene polymerization system utilizing the pressurization system of the present invention.

### DETAILED DESCRIPTION

While the making and using of various embodiments of the present invention are discussed in detail below, it should be appreciated that the present invention provides many applicable inventive concepts which can be embodied in a wide variety of specific contexts, all falling with the scope of the claims. The specific embodiments discussed herein are merely illustrative of specific ways to make and use the invention, and do not limit the scope of the invention, which is defined in the claims

### Example 1

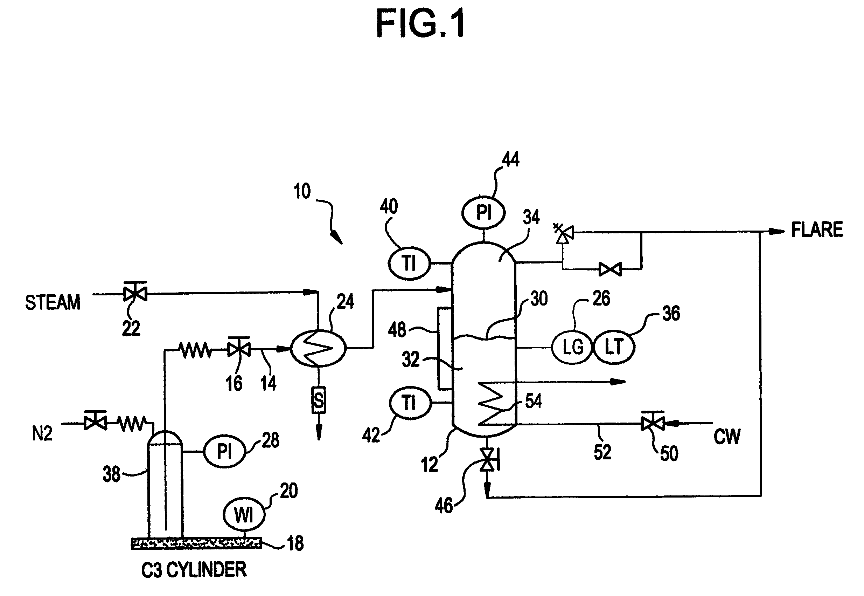

In order to determine whether effective control of a propylene pressurization vessel could be maintained under supercritical conditions, an experimental apparatus 10 was assembled as generally as illustrated in FIGURE 1. Propylene was charged to the supply cylinder 38 which was then pressurized with nitrogen. The valve 16 between the supply cylinder 38 and the pressurization vessel 12 was opened to place an initial charge of propylene into the vessel 12 through feed line 14 and heat exchanger 24. After the initial charge of propylene had been introduced into vessel 12, the valve 16 was closed and the supply cylinder 38 was refilled with propylene. As illustrated, supply cylinder 38 is mounted on scale 18 with a weight indicator 20 for monitoring the weight of the cylinder along with a pressure monitor 28 for monitoring the pressure of the cylinder.

The steam supply was turned on with valve 22 to supply heat and to allow the level sensor, a differential pressure ("DP") cell 26, to equilibrate. After the DP cell 26 had stabilized, the propylene control valve 16 was opened and the vessel 12 was brought up to operating pressure, in this case 48.92 bars (710 psig). Readings from the DP cell 26 were transmitted to a recording device by level transmitter 36. Superheated propylene was injected into the top of the vessel 12 to keep the pressure constant while excess liquid was drained off the bottom of the tank through discharge valve 46 until the desired level in the vessel was achieved.

Pressure within the vessel 12 can be observed with a pressure sensor 44.

In order to maintain the temperature in the lower section the vessel 12 to maintain the temperature in the lower section of the vessel 12 below the temperature in the upper region 34 of the vessel, water was supplied to cooling coil 54 via cooling water valve 50 and supply line 52. Temperatures in the upper region 34 and the lower region 32 can be observed with temperature sensor 40 and 42 respectively. Below the critical pressure, the transition 30 between the dense (liquid) region 32 and compressible (gas) region 34 in the vessel 12, as viewed in sight glass 48, was apparent. However, as the pressure was increased to 48.92 bars (710 psig) and the operating conditions moved outside of the phase envelop, the interface (as viewed through a sight glass) between the vapor and liquid phases in the vessel disappeared. However, due to the temperature gradient in the vessel, there still existed a dense and compressible region inside the vessel.

Since the pressure in the vessel decreased as propylene condensed, either on the interior wall of the vessel or at the interface of the dense (liquid) region 32 and the compressible (vapor) region 34, superheated propylene was added intermittently to maintain the desired pressure in the vessel.

Two different experimental procedures were employed during the test. First, the unit was operated in an increasing level mode, e.g., the level of the dense (liquid) region was allowed to increase as propylene in the compressible (vapor) region of the vessel condensed. Next, the vessel was operated in a constant level mode. In the constant level mode, fluid was drained from the bottom region 32 of the vessel via discharge valve 46 in order to maintain the liquid level in the vessel within a predetermined range near the middle of the vessel.

In each case, DP readings, liquid and vapor temperatures, and supply cylinder weight were recorded at fixed time intervals as indicated in Tables 1 and 2 below:

**Table 1- Condensation Rates at 48.9 bars (710 psig) with increasing level**

| Pressure bars (psig) | | Time (min) | Vapor Temp (F) °C | Liquid Temp (F) | Cylinder wt. (lbs) | DP level Reading | Time interval (min) | Condensation rate w/DP level vs. cyl. wt (lbs/hr) kg/hr | Condensation rate w/cyl. wt. (lbs/hr) kg/hr |
|---|---|---|---|---|---|---|---|---|---|
| | | 0 | | | 147.0 | | | | |
| 48.9 (710) | | 5 | 133.9 (273.0) | 37.9 (100.2) | 145.7 | 205 | 5.00 | | |
| 48.9 (710) | | 10 | 131.7 (269.0) | 35.9 (96.6) | 145.4 | 225 | 5.00 | (4.36) 1.98 | (4.18) 1.9 |
| 48.9 (710) | | 15 | 130.9 (267.6) | 35.6 (96.1) | 145.2 | 234 | 5.00 | (1.96) 0.89 | (2.79) 1.27 |
| 48.9 (710) | | 20 | 129.3 (264.7) | 35.9 (96.6) | 145.0 | 240 | 5.00 | (1.31) 0.59 | (2.79) 1.27 |
| 48.9 (710) | | 25 | 128.4 (263.1) | 36.7 (98.0) | 144.8 | 257 | 5.00 | (3.71) 1.68 | (2.79) 1.27 |
| 48.9 (710) | | 30 | 126.7 (260.1) | 36.7 (98.1) | 144.6 | 270 | 5.00 | (2.84) 1.29 | (2.79) 1.27 |
| 48.9 (710) | | 35 | 125.6 (258.0) | 37.3 (99.2) | 144.4 | 276 | 5.00 | (1.31) 0.59 | (2.79) 1.27 |
| 48.9 (710) | | 40 | 124.2 (255.6) | 37.4 (99.3) | 144.2 | 288 | 5.00 | (2.62) 1.19 | (2.79) 1.27 |
| 48.9 (710) | | 45 | 122.9 (253.2) | 37.5 (99.5) | 144.1 | 298 | 5.00 | (2.18) 0.99 | (2.79) 1.27 |
| 48.9 (710) | | 50 | 121.5 (250.7) | 37.5 (99.5) | 143.9 | 309 | 5.00 | (2.40) 1.09 | (2.79) 1.27 |
| 48.9 (710) | | 55 | 120.1 (248.2) | 37.5 (99.5) | 143.8 | 319 | 5.00 | (2.18) 0.99 | (1.39) 0.63 |
| 48.9 (710) | | 65 | 117.7 (243.9) | 37.5 (99.5) | 143.5 | 341 | 10.00 | (2.40) 1.09 | (2.09) 0.95 |
| 48.9 (710) | | 70 | (242.9) 117.2 | (100.4) 38 | 143.4 | 352 | 5.00 | (2.40) 1.09 | (1.39) 0.63 |

**Table 2 - Condensation Rates at 48.9 bars (710 psig) with constant level**

| Pressure bars (psig) | | Time (min) | Time Interval (min) | Vapor Temp (F) °C | Liquid Temp (F) °C | DP level Reading | Cylinder wt. (lbs) kg/hr | Cond. Rate w/cyl. wt kg/hr (lbs/hr) | Cond. Rate w/cyl. wt kg/hr (lbs//hr) | | Cond. Rate w/ cyl. wt. kg/hr (lbs/hr) |
|---|---|---|---|---|---|---|---|---|---|---|---|
| 48.9 (710) | | 0 | 0 | 153.1 (307.6) | 20.9 (68.6) | 200-210 | 70.9 (156.2) | | | | |
| 48.9 (710) | | 10 | 10 | 150.6 (303.1) | 26 (78.8) | " | 70.5 (155.2) | 3.16 (5.11) | | | |
| 48.9 (710) | | 20 | 10 | 144.6 (292.3) | 32.3 (96.6) | " | 70.1 (154.5) | 2.22 (4.88) | | | |
| 48.9 (710) | | 30 | 10 | 139.1 (282.7) | 35.9 (96.6) | " | 69.9 (154.0) | 1.58 (3.49) | (5.11) 2.32 | | |
| 48.9 (710) | | 40 | 10 | 139.4 (282.9) | 27.2 (81) | " | 69.6 (153.2) | 2.53 (5.58) | | | |
| 48.9 (710) | | 50 | 10 | 139.1 (282.4) | 23.7 (72.3) | " | 69.2 (152.4) | 2.53 (5.58) | | | |
| 48.9 (710) | | 60 | 10 | 142 (287.6) | 22.4 (72.3) | " | 68.6 (151.6) | 2.53 (5.58) | (5.58) 2.53 | | (5.34) 2.42 |
| 48.9 (710) | | 70 | 10 | 141.2 (286.2) | (73) 22.8 | " | 68.4 (150.7) | 2.85 (6.27) | | | |
| 48.9 (710) | | 80 | 10 | 141.3 (286.4) | 24.4 (81.3) | " | 68.1 (150) | 2.22 (4.88) | | | |
| 48.9 (710) | | 90 | 10 | 140.3 (284.5) | 30.9 (87.6) | " | 67.8 (149.3) | 2.22 (4.88) | (5.34) 2.42 | | |
| 48.9 (710) | | 100 | 10 | 138.4 (281.2) | 37.3 (99.1) | " | 67.5 (148.6) | 2.22 (4.88) | | | |
| 48.9 (710) | | 110 | 10 | 138.3 (279) | 3.5 (95) | " | 67.1 (147.9) | 2.22 (4.88) | | | |
| 48.9 (710) | | 120 | 10 | 135.4 (275.7) | 37.2 (99) | " | 66.9 (147.3) | 1.9 (4.18) | (4.65) 2.11 | | (5.00) 2.27 |
| 48.9 (710) | | 130 | 10 | 133.9 (273) | 34.1 (93.4) | " | 66.6 (146.7) | 1.9 (4.18) | | | |
| 48.9 (710) | | 140 | 10 | 131.7 (269.1) | 36.4 (97.5) | " | 66.3 (146.1) | 1.9 (4.18) | | | |
| 48.9 (710) | | 150 | 10 | 138.2 (278.2) | 34.1 (93.4) | " | 66 (145.3) | 2.53 (5.58) | (4.62) 2.11 | | |
| 48.9 (710) | | 160 | 10 | 136.1 (277) | 37.1 (98.8) | " | 65.6 (144.6) | 2.22 (4.88) | | | |
| 48.9 (710) | | 170 | 10 | 133.7 (271.6) | 33.2 (91.8) | " | 65.4 (144.1) | 1.58 (3.49) | | | |
| 48.9 (710) | | 180 | 10 | 132.5 (270.5) | 36.1 (97) | " | 65.1 (143.4) | 2.22 (4.88) | (4.42) 2.41 | | (4.53) 2.06 |
| 48.9 (710) | | 190 | 10 | 137.3 (279.1) | 33.8 (92.8) | " | 64.7 (142.6) | 2.53 (5.58) | | | |
| 48.9 (710) | | 200 | 10 | 135.8 (276.4) | 35.5 (95.9) | " | 64.4 (141.9) | 2.22 (4.88) | | | |

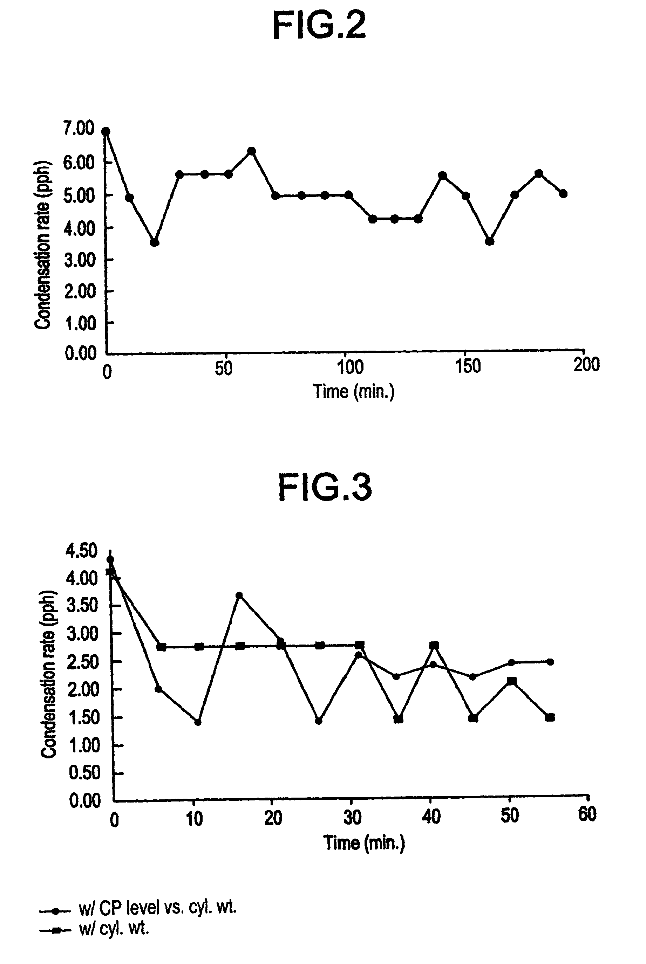

As illustrated by the above example, a propylene pressurization vessel can be designed, controlled and operated with distinct regions of the vessel containing propylene in a dense (liquid) phase and propylene in a compressible supercritical phase. To achieve a desired pressure in the pressurization vessel, the vessel may be pressurized with superheated propylene. Graphical representations of condensation rates vs. time are presented in FIGURES 2 and 3 in order to further illustrate the test results.

In one embodiment of the invention, pressure in the vessel may be controlled by the injection of completely vaporized, superheated propylene in the supercritical region. The temperature of propylene in the zone containing the compressible supercritical phase may be maintained by controlling the temperature of the superheated propylene. Preferably, the temperature of the superheated propylene is in the range of 93.33°C (200°F) to 137.77°C (280°F), more preferably, the temperature of the superheated propylene is in the range of approximately 115.55°C (240°F). The pressure of the vessel is preferably in the range of 45.47 to 55.12 bars (660 to 800 psig), more preferably in the range of 48.23 to 50.30 bars (700 to 730 psig), most preferably in the range of approximately 48.92 bars (710 psig). The temperature of the dense subcooled liquid propylene in the vessel is typically in the range of 26.66°C (80°F) to 60°C (140°F), preferably 32.22°C(90°F) to 43.33°C (110°F), and most preferably approximately 37.77°C (100°F). Operation of the pressurization vessel in this mode allows a propylene polymerization system to be pressurized and operated at levels above conventional polymerization temperatures and pressures, for example at pressures of 45.47 to 48.23 bars (660 to 700 psig).

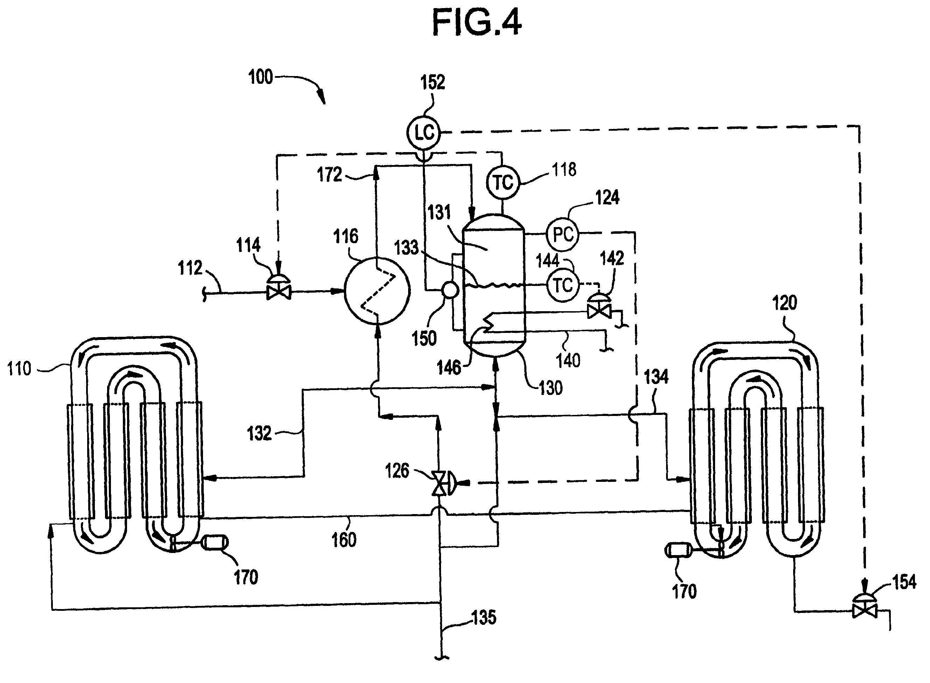

Referring now to FIGURE 4, a propylene polymerization system or apparatus embodying the invention is schematically illustrated. As illustrated, the system includes a first loop reactor 110, a second loop reactor 120 connected in series with the first loop reactor via line 160, and a propylene pressurization system generally designated 100. The loop reactors 110 and 120 are provided with agitators 170 to promote mixing. Although illustrated in the context of a double loop reactor system, the pressurization system is, of course, applicable to single reactor systems and reactors other than loop-type reactors.

Propylene is supplied to the system via feed line 135 which provides propylene to both loop reactors and the pressurization system 100. Propylene fed to the pressurization system passes through a heat exchanger 116. A steam supply 112 and control valve 114 are provided for heating heat exchanger 116,

Pressurization system 100 includes a pressurization vessel 130 which is equipped with an internal cooling coil 146 positioned in the lower portion of the vessel. Cooling water is supplied to the coil via supply line 140 and the flow of cooling water is regulated by control valve 142. The first loop reactor 110 and second loop reactor 120 communicate with the pressurization vessel 130 via lines 132 and 134.

Pressurization vessel 130 is equipped with an upper temperature sensor/controller 118 located in the upper portion of the vessel 130. Alternatively, the temperature sensor 118 may be located in propylene feed line 172 between the heat exchanger 116 and the pressurization vessel 130. The signal from the sensor 118 is transmitted to control valve 114 in steam supply line 112 to regulate the flow of steam to heat exchanger 116.

Pressurization vessel 130 is also provided with a DP cell 150 that provides a signal to level controller 152. The signal from level controller 152 is transmitted to control valve 154 which regulates the discharge of propylene and polymer from the second loop reactor 120. Thus, if the fluid level in pressurization vessel 130 rises above the desired level, the control valve 154 opens to release propylene and polymer from the system. Alternatively, if the level in the vessel 130 drops below the desired level, the level controller 152 transmits a signal to control valve 154 to close the valve.

Pressure in the vessel 130 is regulated by the addition of superheated propylene vapor. The pressurization vessel 130 is equipped with a pressure controller 124 which is operatively connected to control valve 126. In operation, as the pressure in the vessel 130 drops, pressure controller 124 transmits a signal to control valve 126. Control valve 126 opens in response to the signal, supplying propylene to heat exchanger 116 wherein the propylene is superheated prior to introduction to the vessel 130. During operation, pressure in the vessel is preferably in the range of 45.47 to 55.12 bars (660 to 800 psig), more preferably in the range of 48.23 to 50.30 bars (700 to 730 psig), and most preferably in the range of approximately 48.92 bars (710 psig).

In operation, propylene is present in the pressurization vessel 130 in two distinct phases, a superheated compressible (vapor) phase, corresponding to upper region 131 of the vessel, and a subcooled dense (liquid) phase corresponding to region 133 in the lower portion of the vessel. Typically, the temperature in the upper region 131 is maintained in the range of 93.33°C (200°F) to 137.77°C (280°F). Preferably, the temperature of the superheated propylene in the upper region 131 of the vessel is in the range of approximately 115.55° (240°F). The temperature of the dense subcooled liquid propylene in the lower region 133 of the pressurization vessel is typically in the range of 26.66°C (80°F) to 60°C (140°F), preferably 32.22°C (90°F) to 43.33°C (110°F), and most preferably approximately 37.77°C (100°F). As used herein, the term "subcooled" refers to temperature below the critical temperature of propylene at the relevant pressure.

The temperature in the lower region 133 of the pressurization vessel is maintained with internal cooling coil 146. The pressurization vessel 130 is equipped with a temperature sensor 144 at a location corresponding to the lower region 133 of the vessel. The flow of cooling water to the coil is controlled by control valve 142 which opens and closes in response to signals received from sensor 144. As will be appreciated by those skilled in the art, other cooling mediums, such as the propylene feed to the second reactor 120, could be utilized as the cooling medium.

An important feature of the present invention is the combined use of internal cooling of the pressurization vessel 130 and a differential pressure cell 150 in order to control the level of the dense subcooled liquid propylene in the vessel. Although propylene is present in the pressurization vessel in two phases, e.g., a compressible superheated phase and dense subcooled phase, under supercritical conditions the interface between the two phases becomes visually undetectable. Consequently, a typical level monitoring device, for example a sight glass, cannot be used to control the dense, or fluid phase, level in the pressurization vessel. Thus, an alternative level monitoring device, e.g., a differential pressure, is needed to monitor the fluid phase level in the vessel. However, in order for a differential pressure cell to be utilized as a level monitoring device, the density gradient between the superheated propylene in the upper region 131 of the vessel 130 and the dense, subcooled propylene in the lower region of the vessel must be significant enough to allow the DP cell to detect a pressure differential due to the density gradient. The use of an internal cooling coil 146 in vessel 130 to cool the dense liquid phase propylene in the lower region 133 of the vessel to a temperature below the critical temperature provides the required density gradient, thereby allowing the use of a DP cell as a level monitoring device.

For example, in one embodiment of the invention, the vessel is operated at 710 psig. The temperature in a first or upper region 131 of the vessel, corresponding to the compressible, supercritical propylene, is maintained at approximately 115.55°C (240°F) whereas the dense, liquid phase propylene in the lower or second region 133 of the vessel 130 is cooled to approximately 37.77°C (100°F). though the use of internal cooling coil 146. Since the specific volume of propylene at 48.92 bars (710 psig) and 37.77°C (100°F) is 2.06 cm³/g (0.033 ft³/lb) and the specific volume of propylene at 48.92 bars (710 psig) and 115.55°C (240°F) is 9.05 cm³/g (0.145 ft³/lb), the density ratio between the superheated propylene in the upper region 131 and the subcooled liquid propylene in the lower region is 4.39. This density gradient is sufficient to allow a DP cell to be used as a level indication device for vessel 130.

While certain embodiments of the invention have been illustrated for the purposes of this disclosure, numerous changes in the composition, method and article of manufacture presented herein may be made by those skilled in the art, such changes being embodied within the scope and spirit of the present invention as defined by the appended claims.

## Claims

1. A system for pressurization of a propylene polymerization reactor comprising a pressuration vessel having propylene in a first region at supercritical conditions and propylene in a second region at subcritical conditions, said vessel including:
- a level controller;
- an internal heat exchanger located within the pressurization system;
- a pressure sensor for monitoring the pressure in the system, the pressure sensor providing a signal indicative of the pressure in the system;
- a control valve for supplying heated gas to a first region of the system in response to signals from the pressure sensor;
- a temperature sensor for monitoring the temperature in a second region of the pressurization system, the temperature sensor providing a signal indicative of the temperature in the second region of the system; and
- a control valve for supplying a cooling medium to the internal heat exchanger to cool propylene in the second region of the system in response to signals from the temperature sensor;
said pressurisation vessel being connected to a propylene polymerization reactor wherein the reactor includes a discharge valve operatively connected to the level controller for controlling the discharge of propylene from the reactor.

2. The system of claim 1 that includes an internal heat exchanger for cooling propylene liquid below the critical temperature.

3. The system of claim 1 wherein the pressure is between 45.47 and 55.12 bars (660 and 800 psig), which contains propylene at a temperature above the corresponding critical temperature of propylene; and which contains propylene below the corresponding critical temperature of propylene.

4. The system of claim 1 wherein the pressure is between 48.23 and 50.30 bars (700 and 730 psig), which contains propylene at a temperature above the corresponding critical temperature of propylene, and which contains propylene below the corresponding critical temperature of propylene.

5. The system of claim 1 which contains propylene in an upper region at a temperature and pressure above the critical temperature and pressure of propylene; and which contains propylene in a lower region below the critical temperature of propylene.

6. The system of claim 5 wherein the temperature in the upper region is maintained in the range of 93.33 to 137.77 °C (200°F to 280°F).

7. The system of claim 5 wherein the temperature in the upper region is maintained at approximately 115.55 °C (240°F).

8. The system of claim 5 wherein the temperature in the lower region is maintained in the range from 26.66 to 60 °C (80 to 140°F).

9. The system of claim 5 wherein the temperature in the lower region is maintained at approximately 37.77 °C (100°F).

10. A method of pressurizing a polymerizing propylene system comprising a pressurization vessel connected to a propylene polymerization reactor, the method comprising the steps of:
- injecting a heated gas into a pressurization vessel to maintain a volume of propylene in a first region of the pressurization vessel in a supercritical temperature and pressure range;
- supplying cooling medium to the internal heat exchanger in a second region of the vessel to maintain the temperature of the propylene in the second region below the critical temperature of propylene at the pressure in the pressurization vessel;

11. The method of claim 10 wherein the pressure is controlled by the addition of polypropylene under supercritical conditions.

12. The method of claim 10 wherein the pressure is controlled by the addition of an inert gas.

13. The method of claim 11 wherein the level of propylene present below the critical temperature of propylene is monitored with a differential pressure sensing unit.

14. The method of claim 10 wherein the level of propylene below the critical temperature of propylene at the pressure in the pressurization vessel is controlled by the discharge of the reactor.

15. The method of claim 10 further comprising the step of maintaining the temperature of propylene in the first region of the pressurization vessel in the range of 93.33 to 137.77 °C (200°F to 280°F).

16. The method of claim 10 further comprising the step of maintaining the temperature in the first region of the pressurization vessel at approximately 115.55 °C (240°F).

17. The method of claim 10 wherein the temperature in the second region of the pressurization vessel is maintained in the range from 26.66 to 60 °C (80°F to 140°F).

18. The method of claim 10 wherein the temperature in the second region of the pressurization vessel is maintained at approximately 37.77 °C (100°F).

## Patentansprüche

1. Ein System zur Druckbeaufschlagung eines Propylenpolymerisationsreaktors, der ein Druckbeaufschlagungsgefäß umfasst, das Propylen in einem ersten Gebiet auf überkritischen Bedingungen und Propylen in einem zweiten Gebiet auf unterkritischen Bedingungen aufweist, wobei besagtes Gefäß folgendes umfasst :
- einen Niveauregler ;
- einen innerhalb des Druckbeaufschlagungssystems befindlichen internen Wärmetauscher ;
- einen Drucksensor zum Überwachen des Drucks in dem System, wobei der Drucksensor ein Signal verschafft, das den Druck in dem System anzeigt ;
- ein Regelventil zur Zufuhr von erhitztem Gas zu einem ersten Gebiet des Systems in Reaktion auf Signale von dem Drucksensor ;
- einen Temperatursensor zur Überwachung der Temperatur in einem zweiten Gebiet des Druckbeaufschlagungssystems, wobei der Temperatursensor ein Signal verschafft, das die Temperatur in dem zweiten Gebiet des Systems anzeigt ; und
- ein Regelventil zur Zufuhr eines Kühlmediums zu dem internen Wärmetauscher, um Propylen in dem zweiten Gebiet des Systems in Reaktion auf Signale von dem Temperatursensor zu kühlen ;
wobei besagtes Druckbeaufschlagungsgefäß mit einem Propylenpolymerisationsreaktor verbunden ist, wobei der Reaktor ein Abfuhrventil umfasst, das wirksam mit dem Niveauregler verbunden ist, um die Abfuhr von Propylen aus dem Reaktor zu regeln.

2. Das System von Anspruch 1, das einen internen Wärmetauscher zum Kühlen von Propylenflüssigkeit unter die kritische Temperatur umfasst.

3. Das System von Anspruch 1, wobei der Druck zwischen 45,47 und 55,12 bar (660 und 800 psig) liegt, das Propylen auf einer Temperatur über der entsprechenden kritischen Temperatur von Propylen enthält ; und das Propylen unter der entsprechenden kritischen Temperatur von Propylen enthält.

4. Das System von Anspruch 1, wobei der Druck zwischen 48,23 und 50,30 bar (700 und 730 psig) liegt, das Propylen auf einer Temperatur über der entsprechenden kritischen Temperatur von Propylen enthält, und das Propylen unter der entsprechenden kritischen Temperatur von Propylen enthält.

5. Das System von Anspruch 1, das Propylen in einem oberen Gebiet auf einer Temperatur und einem Druck über der kritischen Temperatur und dem kritischen Druck von Propylen enthält ; und das Propylen in einem unteren Gebiet unter der kritischen Temperatur von Propylen enthält.

6. Das System von Anspruch 5, wobei die Temperatur in dem oberen Gebiet in dem Bereich von 93,33 bis 137,77°C (200°F bis 280°F) gehalten wird.

7. Das System von Anspruch 5, wobei die Temperatur in dem oberen Gebiet auf annähernd 115,55°C (240°F) gehalten wird.

8. Das System von Anspruch 5, wobei die Temperatur in dem unteren Gebiet im Bereich von 26,66 bis 60°C (80 bis 140°F) gehalten wird.

9. Das System von Anspruch 5, wobei die Temperatur in dem unteren Gebiet auf annähernd 37,77°C (100°F) gehalten wird.

10. Ein Verfahren zur Druckbeaufschlagung eines Propylenpolymerisierungssystems, umfassend ein mit einem Propylenpolymerisationsreaktor verbundenes Druckbeaufschlagungsgefäß, wobei das Verfahren die Schritte umfasst des :
- Einspritzens eines erhitzten Gases in ein Druckbeaufschlagungsgefäß, um ein Volumen von Propylen in einem ersten Gebiet des Druckbeaufschlagungsgefäßes in einem überkritischen Temperatur- und Druckbereich zu halten ;
- Zuführens von Kühlmedium zu dem internen Wärmetauscher in einem zweiten Gebiet des Gefäßes, um die Temperatur des Propylens in dem zweiten Gebiet unter der kritischen Temperatur von Propylen auf dem Druck in dem Druckbeaufschlagungsgefäß zu halten ;

11. Das Verfahren von Anspruch 10, wobei der Druck durch den Zusatz von Polypropylen unter überkritischen Bedingungen geregelt wird.

12. Das Verfahren von Anspruch 10, wobei der Druck durch Zusatz eines inerten Gases geregelt wird.

13. Das Verfahren von Anspruch 11, wobei das Niveau vorhandenen Propylens, das unter der kritischen Temperatur von Propylen liegt, mit einer Differenzdruckfühleinheit gemessen wird.

14. Das Verfahren von Anspruch 10, wobei das Niveau von
Propylen unter der kritischen Temperatur von Propylen auf dem Druck in dem Druckbeaufschlagungsgefäß durch die Abfuhr des Reaktors geregelt wird.

15. Das Verfahren von Anspruch 10, das weiter den Schritt des Aufrechterhaltens der Temperatur von Propylen in dem ersten Gebiet des Druckbeaufschlagungsgefäßes in dem Bereich von 93,33 bis 137,77°C (200°F bis 280°F) umfasst.

16. Das Verfahren von Anspruch 10, das weiter den Schritt des Aufrechterhaltens der Temperatur in dem ersten Gebiet des Druckbeaufschlagungsgefäßes auf annähernd 115,55°C (240°F) umfasst.

17. Das Verfahren von Anspruch 10, wobei die Temperatur in dem zweiten Gebiet des Druckbeaufschlagungsgefäßes in dem Bereich von 26,66 bis 60°C (80°F bis 140°F) aufrechterhalten wird.

18. Das Verfahren von Anspruch 10, wobei die Temperatur in dem zweiten Gebiet des Druckbeaufschlagungsgefäßes auf annähernd 37,33°C (100°F) gehalten wird.

## Revendications

1. Système pour la mise sous pression d'un. réacteur de polymérisation de propylène comprenant un réservoir de mise sous pression contenant du propylène dans une première zone soumise à des conditions supercritiques et du propylène dans une deuxième zone soumise à des conditions sous-critiques, ledit réservoir englobant :
- un régulateur de niveau ;
- un échangeur de chaleur interne disposé au sein du système de mise sous pression ;
- un capteur de pression pour surveiller la pression régnant dans le système, le capteur de pression procurant un signal indicateur de la pression régnant dans le système ;
- un clapet de commande pour acheminer du gaz chauffé à une première zone du système en réponse à des signaux émis par le capteur de pression ;
- un capteur de température pour surveiller la température régnant dans une deuxième zone du système de mise sous pression, le capteur de température procurant un signal indicateur de la température régnant dans la deuxième zone du système ; et
- un clapet de commande pour acheminer un milieu de refroidissement à l'échangeur de chaleur interne dans le but de refroidir le propylène dans la deuxième zone du système en réponse aux signaux émis par le capteur de température ;
ledit réservoir de mise sous pression étant raccordé à un réacteur de polymérisation du propylène, le réacteur englobant un clapet de décharge raccordé de manière opérante au régulateur de niveau dans le but de régler la décharge de propylène à partir du réacteur.

2. Système selon la revendication 1, qui englobe un échangeur de chaleur interne pour refroidir le propylène liquide en dessous de la température critique.

3. Système selon la revendication 1, dans lequel la pression s'élève entre 45,47 et 55,12 bars (660 et 800 psig), qui contient du propylène à une température supérieure à la température critique correspondante du propylène, et qui contient du propylène en dessous de la température critique correspondante du propylène.

4. Système selon la revendication 1, dans lequel la pression s'élève entre 48,23 et 50,30 bars (700 et 730 psig), qui contient du propylène à une température supérieure à la température critique correspondante du propylène, et qui contient du propylène en dessous de la température critique correspondante du propylène.

5. Système selon la revendication 1, qui contient du propylène dans une zone supérieure à une température et sous une pression supérieures à la température critique et à la pression critique du propylène, et qui contient du propylène dans une zone inférieure en dessous de la température critique du propylène.

6. Système selon la revendication 5, dans lequel la température, dans la zone supérieure, est maintenue dans la plage de 93,33 à 137,77 °C (200 °F à 280 °F).

7. Système selon la revendication 5, dans lequel la température, dans la zone supérieure, est maintenue à une valeur approximative de 115,55 °C (240 °F).

8. Système selon la revendication 5, dans lequel la température, dans la zone inférieure, est maintenue dans la plage de 26,66 à 60°C (80 à 140 °F).

9. Système selon la revendication 5, dans lequel la température, dans la zone inférieure, est maintenue à une valeur approximative de 37,77 °C (100 °F).

10. Procédé de mise sous pression d'un système de polymérisation du propylène comprenant un réservoir de mise sous pression raccordé à un réacteur de polymérisation du propylène, le procédé comprenant les étapes consistant à :
- injecter un gaz chauffé dans un réservoir de mise sous pression dans le but de maintenir un volume de propylène dans une première zone du réservoir de mise sous pression dans une plage de température et de pression supercritiques ;
- acheminer un milieu de refroidissement à un échangeur de chaleur interne dans une deuxième zone du réservoir pour maintenir la température du propylène dans la deuxième zone en dessous de la température critique du propylène à la pression régnant dans le réservoir de mise sous pression.

11. Procédé selon la revendication 10, dans lequel la pression est réglée par l'addition de polypropylène dans des conditions supercritiques.

12. Procédé selon la revendication 10, dans lequel la pression est réglée par l'addition d'un gaz inerte.

13. Procédé selon la revendication 11, dans lequel le niveau de propylène présent en dessous de la température critique du propylène est surveillé avec une unité de détection de la pression différentielle.

14. Procédé selon la revendication 10, dans lequel le niveau de propylène en dessous de la température critique du propylène à la pression régnant dans le réservoir de mise sous pression est réglé par la décharge du réacteur.

15. Procédé selon la revendication 10, comprenant en outre l'étape consistant à maintenir la température du propylène dans la première zone du réservoir de mise sous pression dans la plage de 93,33 à 137,77 °C (200 °F à 280 °F).

16. Procédé selon la revendication 10, comprenant en outre l'étape consistant à maintenir la température dans la première zone du réservoir de mise sous pression à une valeur approximative de 115,55 °C (240 °F).

17. Procédé selon la revendication 10, dans lequel la température régnant dans la deuxième zone du réservoir de mise sous pression est maintenue dans la plage de 26,66 à 60°C (80 °F à 140 °F).

18. Procédé selon la revendication 10, dans lequel la température régnant dans la deuxième zone du réservoir de mise sous pression est maintenue à une valeur approximative de 37,77 °C (100 °F).
